# EUROPEAN PATENT SPECIFICATION

(11) **EP 2 060 474 B1**
(45) Date of publication and mention of the grant of the patent: **27.07.2011**
(21) Application number: 08018912.9
(22) Date of filing: 29.10.2008
(51) Int. Cl.: B62D 25/20

(54) **Vehicle bottom structure**
Fahrzeugbodenanordnung
Structure de partie inférieure de véhicule

(30) Priority: 14.11.2007 JP 2007295255
(43) Date of publication of application: 20.05.2009
(73) Proprietor: Mazda Motor Corporation, Aki-gun, Hiroshima 730-8670 (JP)
(72) Inventor: Shinoda, Takahiro, Aki-gun, Hiroshima 730-8670 (JP); Monden, Katsunori, Aki-gun Hiroshima 730-8670 (JP); Kadoya, Toshimitsu, Akig-gun, Hiroshima 730-8670 (JP); Kamei, Takehiro, Aki-gun, Hiroshima 730-8670 (JP)
(74) Representative: Müller-Boré & Partner Patentanwälte

(56) References cited:
- EP-A- 1 792 808

## Description

### BACKGROUND OF THE INVENTION

### 1. Field of the Invention

The present invention relates to a vehicle bottom structure provided with seat slide rails extending across front and rear cross-members provided on a floor.

### 2. Description of Related Art

A vehicle structure provided with seat slide rails which allow a vehicle seat to slide back and forth in the vehicle length direction has been known. Each of the seat slide rails includes, for example, a lower rail fixed to a floor panel and an upper rail bearing the seat and being slidable on the lower rail.

The lower rail of the seat slide rail is fixed to a fixing point on the floor panel. For example, Patent Literature 1 discloses a vehicle structure in which the seat slide rail is fixed to front and rear cross-members provided on the floor as the fixing points.

### Patent Literature 1: Publication of Japanese Patent Application No. 2003-146248

### SUMMARY OF THE INVENTION

In most of seatbelt systems for the front seat of a vehicle, a webbing for restraining a passenger extends from a retractor assembled at the junction of a side sill and a center pillar to a buckle attached to the seat through the inside of the center pillar. According to the seatbelt systems of this kind, the center pillar bears part of a load caused by forward movement of the passenger upon a frontal collision.

On the other hand, in a seatbelt system for a front seat of a vehicle without a center pillar (a so-called center pillar-less vehicle), the webbing extends from a retractor provided in the front seat and passes the inside of the seat to reach a shoulder anchor, and then to a lap anchor provided in the front seat. The webbing between the anchors is connected to a buckle attached to the seat by a tongue. According to this seatbelt system, every component is assembled to the front seat. Therefore, when a frontal collision occurs, a load caused by forward movement of the passenger is totally applied to a seat fixing point at which the seat is fixed to the vehicle body.

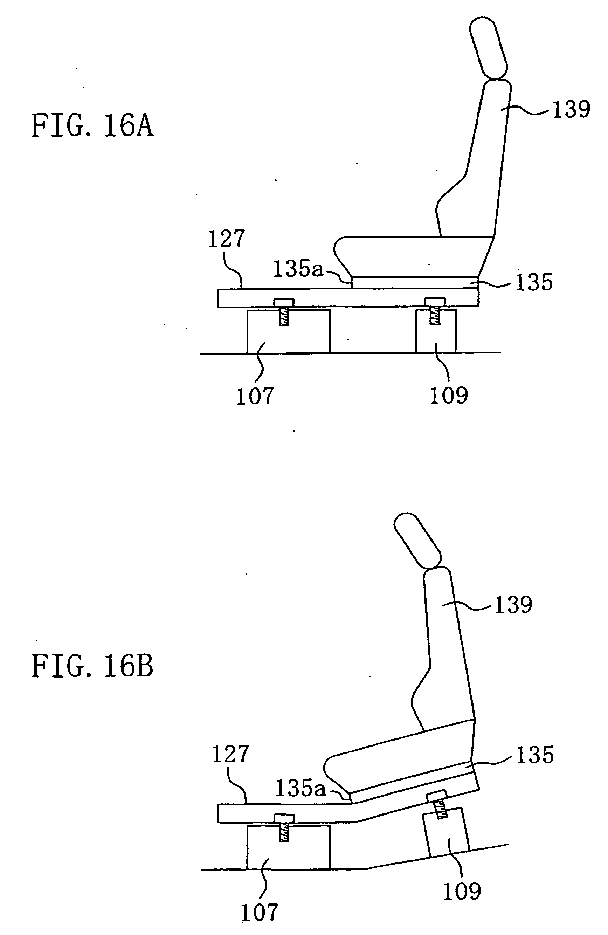

For example, if the center pillar-less vehicle is combined with the vehicle body structure disclosed by Patent Literature 1 having the seat slide rail fixed to the front and rear cross-members, the following drawbacks arise. More specifically, when a frontal collision occurs while a seat **139** is in the rearmost position in the vehicle length direction as shown in FIG. **16A**, a large downward load is applied from a front end 135a of an upper rail **135** to the lower rail **127** which is in the form of a beam with both ends fixed. As a result, the lower rail **127** may break at the center thereof (part of the lower rail **127** near the front end fixed to the front cross-member **107).** At worst, the load is hardly transmitted to the front end of the lower rail **127** fixed to the front cross-member **107.** Instead, the rear end of the lower rail **127** fixed to the rear cross-member **109** receives the total load of the frontal collision. As a result, as shown in FIG. **16B****,** the lower **rail 127** may come off the rear cross-member **109.** This drawback occurs more noticeably on one of the seat slide rail on the outside in the vehicle width direction whose rigidity is enhanced by the side sill and therefore the floor is less likely to be deformed than on the other seat slide rail on the inside in the vehicle width direction around which the floor is deformed to absorb the load applied to the fixing point of the rail.

In the case of a lateral collision, the side sill to which the vehicle widthwise ends of the front and rear cross-members are connected may fall to the inside in the vehicle width direction, i.e., inward fall of the side sill occurs.

EP 1 792 808 A1 discloses a lower vehicle body structure and vehicle provided therewith comprising a seat support member outer which extends longitudinally inside a side sill.

With the foregoing in mind, the present invention has been achieved. With respect to a vehicle bottom structure provided with a seat slide rail extending across front and rear cross-members provided on a floor, an object of the present invention is to provide a technique of reducing the possibility of break of the seat slide rail when a load caused by forward movement of a passenger upon a frontal collision is applied to the seat slide rail and reducing the possibility of inward fall of the side sill upon a lateral collision.

A first aspect of the invention is directed to a vehicle bottom structure including: a floor; a side sill extending in the vehicle length direction at a vehicle widthwise end of the floor; front and rear cross-members extending in the vehicle width direction on the floor to be spaced from each other in the vehicle length direction with their vehicle widthwise ends being connected to the side sill; a seat slide rail extending in the vehicle length direction across the front and rear cross-members to allow a seat to move back and forth in the vehicle length direction; and a connector bracket extending in the vehicle length direction to connect the front and rear cross-members and forming a closed section between the front and rear cross-members together with the floor and the side sill, wherein the seat slide rail has a lower rail having a bottom wall and an upper rail bearing the seat and being slidable on the lower rail and the connector bracket has a top wall in contact with or adjacent to a bottom face of the bottom wall of the lower rail and a vertical wall extending downward from the top wall, wherein front and rear ends of the lower rail are fixed to parts of the top wall of the connector bracket near and above the front and rear cross-members, respectively, and the vehicle bottom structure further comprises a reinforcement member for reinforcing a fixing point on the connector bracket to which the front end of the lower rail is fixed and its vicinity.

According to the first aspect of the invention, the connector bracket extends in the vehicle length direction to connect the front and rear cross-members and forms a closed section between the front and rear cross-members together with the floor and the side sill. Further, the connector bracket has the top wall in contact with or adjacent to the bottom face of the bottom wall of the lower rail. Therefore, when a load caused by forward movement of a passenger upon a frontal collision is applied to the seat slide rail, the connector bracket supports the seat slide rail so that the deformation of the seat slide rail is less likely to occur. Further, the rigidity of the side sill is improved. Thus, even if the vehicle is free from a center pillar and provided with the seat slide rail extending across the front and rear cross-members, the possibilities of break of the seat slide rail upon a frontal collision and inward fall of the side sill upon a lateral collision are reduced.

According to a second aspect of the invention, the vehicle bottom structure according to the first aspect of the invention is characterized in that front and rear ends of the lower rail are fixed to parts of the top wall of the connector bracket near and above the front and rear cross-members, respectively, and the vehicle bottom structure further includes a reinforcement member for reinforcing a fixing point on the connector bracket to which the front end of the lower rail is fixed and its vicinity.

With the thus-provided reinforcement member, the fixing point on the connector bracket to which the front end of the lower rail is fixed and a load is applied upon a frontal collision and its vicinity is reinforced.

According to a third aspect of the invention, the vehicle bottom structure according to the second aspect of the invention is characterized in that the reinforcement member is provided inside the connector bracket and has a top wall extending above the front cross-member in the vehicle length direction along the top wall of the connector bracket, a rear wall extending downward from a rear end of the top wall of the reinforcement member and an inside wall extending rearward in the vehicle length direction from a vehicle widthwise inner end of the rear wall and fixed to a vehicle widthwise outer face of the vertical wall of the connector bracket.

Since the reinforcement member has the inside wall fixed to the vehicle widthwise outer face of the vertical wall of the connector bracket, the vertical wall of the connector bracket is also reinforced in addition to the top wall thereof. Therefore, the vertical wall is improved in buckling strength against a downward load.

According to a fourth aspect of the invention, the vehicle bottom structure according to the third aspect of the invention is characterized in that the reinforcement member further includes an outside wall extending downward from a vehicle widthwise outer end of the top wall in addition to the top wall, the rear wall and the inside wall and a lower end of the outside wall is in contact with or adjacent to a top face of the front cross-member.

Since the reinforcement member has the outside wall, the connector bracket is improved in vertical rigidity at the vehicle widthwise outer side of the fixing point to which the front end of the lower rail is fixed.

According to a fifth aspect of the invention, the vehicle bottom structure according to any one of the second to fourth aspects of the invention is characterized in that the reinforcement member extends rearward in the vehicle length direction above the front cross-member so that its rear end comes behind a front end of the upper rail when the seat is in the rearmost position in the vehicle length direction.

Since the reinforcement member extends rearward in the vehicle length direction above the front cross-member so that its rear end comes behind the front end of the upper rail when the seat is in the rearmost position in the vehicle length direction, part of the connector bracket corresponding to the front end of the upper rail, which is a point of application of a load upon a frontal collision, is reinforced irrespective of the slide position of the upper rail.

According to a sixth aspect of the invention, the vehicle bottom structure according to any one of the first to fifth aspects of the invention is characterized in that the top wall of the connector bracket is spaced upward from the top faces of the front and rear cross-members so that the connector bracket forms a closed section together with the front and rear cross-members and the side sill.

Since a plurality of closed sections are formed near the fixing point on the connector bracket to which the front end of the lower rail is fixed, support rigidity of the connector bracket is improved.

According to a seventh aspect of the invention, the vehicle bottom structure according to the sixth aspect of the invention is characterized in that a vehicle widthwise outer end of the top wall of the connector bracket is fixed to a top face of the side sill.

Since the vehicle widthwise outer end of the top wall of the connector bracket is fixed to the top face of the side sill, the closed section formed by the connector bracket is enlarged. This improves the rigidity of the side sill and therefore the possibility of the inward fall of the side sill upon a lateral collision is reduced with reliability.

According to an eighth aspect of the invention, the vehicle bottom structure according to any one of the first to seventh aspects of the invention is characterized in that the connector bracket has an extension part extending rearward in the vehicle length direction from its rear end and the extension part has a vertical wall extending at an outward inclination from the front to the rear of the vehicle.

Since the vertical wall of the extension part of the connector bracket extends at an outward inclination from the front to the rear of the vehicle, the fixing point on the connector bracket to which the rear end of the lower rail is fixed is improved in rigidity, while keeping space below the rear seat.

According to a ninth aspect of the invention, the vehicle bottom structure according to the first aspect of the invention is characterized in that the connector bracket extends to connect a rear face of the front cross-member and a front face of the rear cross-member and the vehicle bottom structure further includes a reinforcement member for reinforcing part of the connector bracket corresponding to a front end of the upper rail when the seat is in the rearmost position in the vehicle length direction and its vicinity.

Since the connector bracket extends to connect the rear face of the front cross-member and the front face of the rear cross-member, the deformation of the seat slide rail is reduced by such a simple structure and the connector bracket is reduced in size and weight. Further, as the reinforcement member for reinforcing part of the connector bracket corresponding to the front end of the upper rail when the seat is in the rearmost position and its vicinity is further provided, part of the connector bracket to which a load is applied upon a frontal collision and its vicinity are reinforced.

According to a tenth aspect of the invention, the vehicle bottom structure according to the ninth aspect of the invention is characterized in that the reinforcement member extends at a downward inclination from the rear to the front of the vehicle, while its upper end is fixed to a bottom face of the top wall of the connector bracket and its lower end is fixed to a rear face of the front cross-member.

The thus-arranged reinforcement member functions as an angle brace to improve the vertical rigidity of the connector bracket. Therefore, part of the connector bracket to which a load is applied upon a frontal collision and its vicinity are reinforced with reliability.

### EFFECT OF THE INVENTION

According to the present invention, the vehicle bottom structure includes the connector bracket extending in the vehicle length direction to connect the front and rear cross-members and forming a closed section between the front and rear cross-members together with the floor and the side sill. The connector bracket has the top wall in contact with or adjacent to the bottom face of the bottom wall of the lower rail. Therefore, even if the vehicle is free from a center pillar and provided with the seat slide rail extending across the front and rear cross-members, the possibilities of break of the seat slide rail upon a frontal collision and inward fall of the side sill upon a lateral collision are reduced.

### BRIEF DESCRIPTION OF THE DRAWINGS

FIG. **1** is a perspective view schematically illustrating a right front seat of a vehicle provided with a vehicle bottom structure according to Embodiment 1.
FIG. **2** is a perspective view schematically illustrating a right front portion of the vehicle from which the seat is removed.
FIG. **3** is a perspective view schematically illustrating the vehicle bottom structure.
FIG. **4** is a plan view illustrating the vehicle bottom structure.
FIG. **5** is a sectional view taken along the line V-V of FIG. **4****.**
FIG. **6** is a sectional view taken along the line VI-VI of FIG. **4****.**
FIG. **7** is a sectional view taken along the line VII-VII of FIG. **4****.**
FIG. **8** is a left side perspective view illustrating a connector bracket.
FIG. **9** is a diagonal front perspective view illustrating the connector bracket.
FIG. **10** is a diagonal rear perspective view illustrating the connector bracket.
FIG. **11** is a left side perspective view illustrating a reinforcement member with the connector bracket removed.
FIG. **12** is a diagonal rear perspective view illustrating the reinforcement member with the connector bracket removed.
FIG. **13** is a perspective view schematically illustrating a vehicle bottom structure according to Embodiment 2.
FIG. **14** is a sectional view taken along the line XIV-XIV of FIG. **13****.**
FIGS. **15A** and **15B** are schematic views illustrating the state upon a frontal collision of the vehicle bottom structure according to the present embodiment provided with seat slide rails extending across front and rear cross-members.
FIGS. **16A** and **16B** are schematic views illustrating the state upon a frontal collision of a conventional vehicle bottom structure provided with seat slide rails extending across front and rear cross-members.

### DETAILED DESCRIPTION OF THE INVENTION

Hereinafter, embodiments of the present invention will be described in detail with reference to the drawings.

### (Embodiment 1)

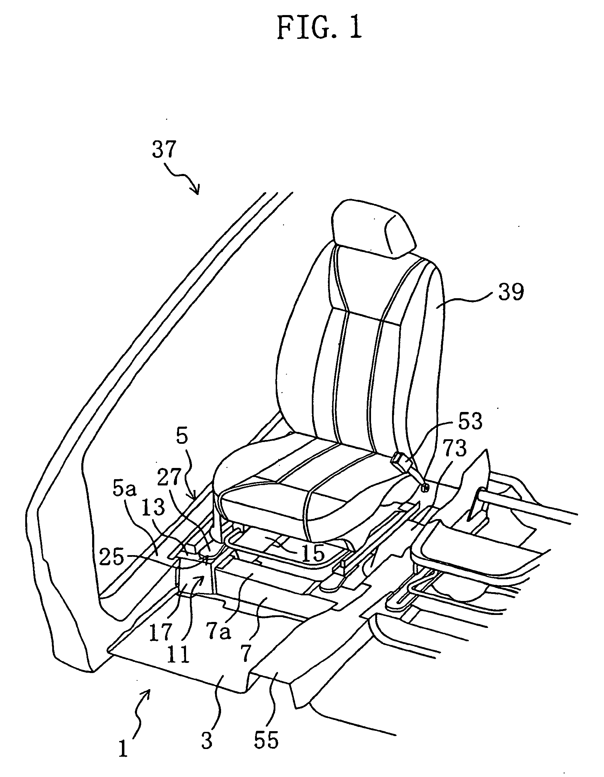

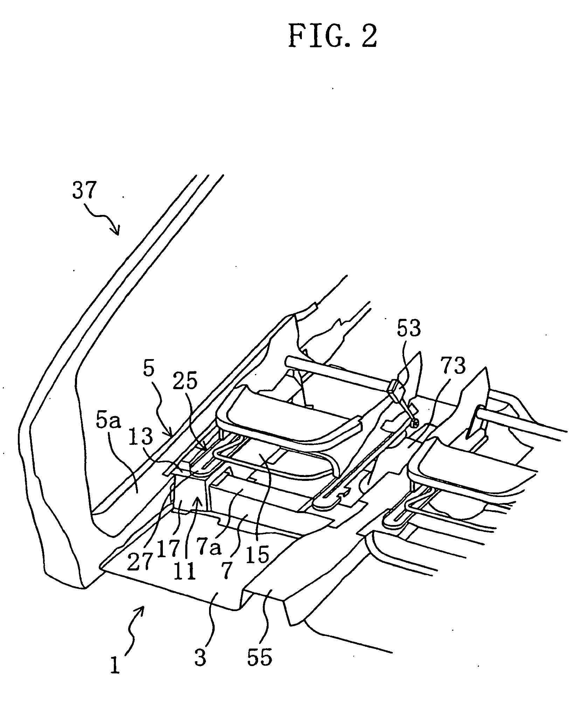

FIGS. **1** and **2** are perspective views schematically illustrating a right front seat **39** of a vehicle **37** provided with a vehicle bottom structure 1 of the present embodiment. The vehicle **37** does not have a center pillar, i.e., it is of a double-doored structure. Therefore, a seat belt system including a retractor (not shown), a buckle **53** and other components is totally assembled to the front seat **39.** The front seat **39** is mounted on seat slide rails **25** to be slidable back and forth in the vehicle length direction along the seat slide rails **25.** Hereinafter, a right portion of the vehicle bottom structure **1** is explained. A left portion thereof is configured almost in the same manner as the right portion. In FIGS. **1** and **2****,** a floor mat placed below the seat slide rails **25** is omitted.

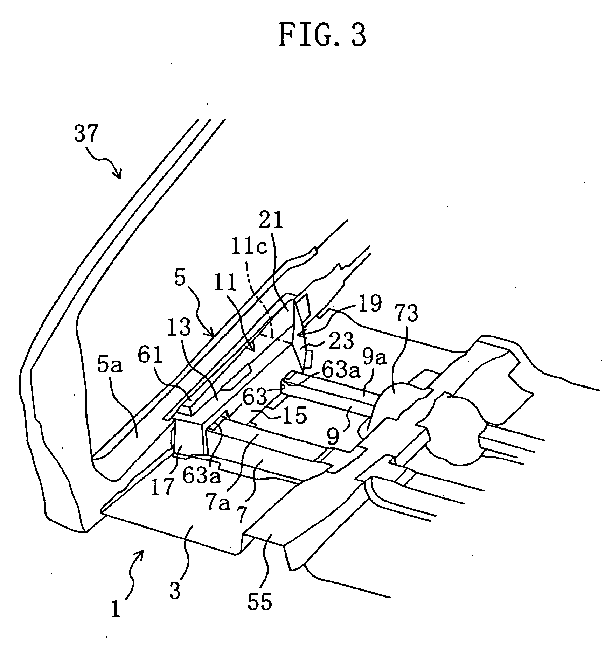

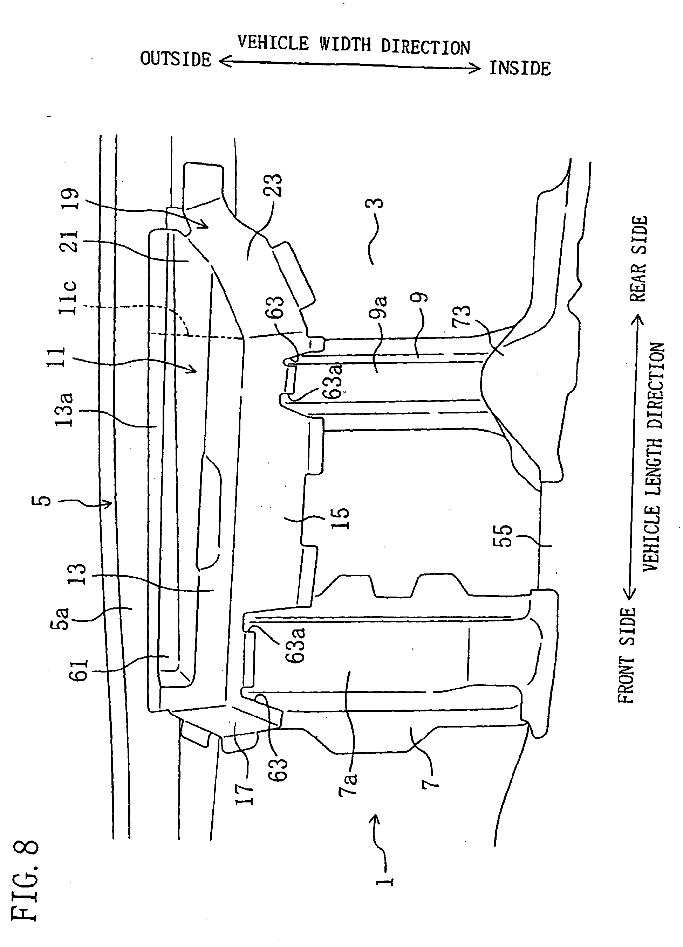

The right portion of the vehicle bottom structure **1** includes, as shown in FIGS. **3** to **12****,** a floor **3,** a side sill **5,** front and rear cross-members **7** and **9,** seat slide rails **25** and a connector bracket **11.** The right portion of the vehicle bottom structure **1** further includes first and second reinforcement members **41** and **65** for reinforcing front and rear fixing points **11a** and **11b** on the connector bracket **11** to which the seat slide rails **25** are fixed, respectively.

In the vehicle widthwise center of the floor **3,** a floor tunnel **55** extending in the vehicle length direction is formed. The side sill **5** is substantially rectangular when viewed in section and extends in the vehicle length direction at the right end of the floor **3** in the vehicle width direction. As shown in FIG. **3****,** the front and rear cross-members **7** and **9** are arranged to be spaced from each other in the vehicle length direction on a right portion of the floor **3** and extend in the vehicle width direction to connect the side sill 5 and the floor tunnel **55.** The front and rear cross-members **7** are **9** substantially rectangular when viewed in section. The height of the front cross-member **7** is greater than that of the rear cross-member **9.**

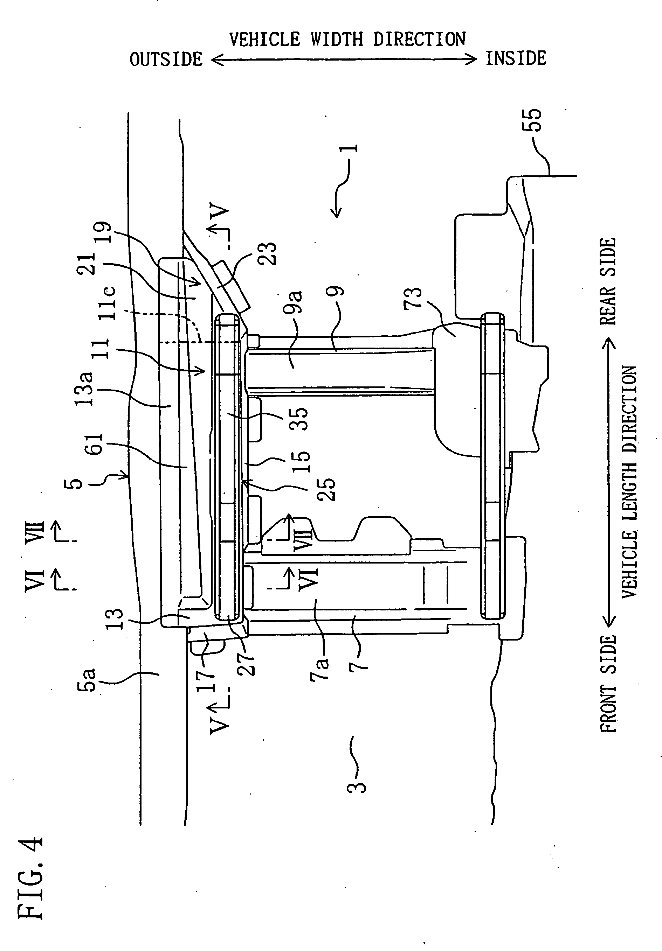

As shown in FIGS. **4** to **7****,** the seat slide rails **25** are arranged above the front and rear cross-members **7** and **9** so that their front ends are situated higher than their rear ends. The seat slide rails **25** extend in the vehicle length direction across the front and rear cross-members **7** and **9** to allow the front seat **39** to move back and forth in the vehicle length direction. More specifically, two seat slide rails **25** are provided to be parallel with each other between the side sill **5** and the floor tunnel **55.** The inside one of the seat slide rails **25** in the vehicle width direction is arranged such that its front end is fixed to a top face **7a** of the front cross-member **7** and its rear end is fixed to a top face of a reinforcement member **73** for reinforcing the connection between the floor tunnel **55** and the rear cross-member **9.** The outside one of the seat slide rails **25** in the vehicle width direction includes a lower rail **27** fixed to the connector bracket **11** and an upper rail **35** which bears the front seat **39** and is slidable on the lower rail **27.**

The lower rail **27** includes a rail body **29** in which the upper rail **35** is fitted, a bottom wall **31** to which the rail body **29** is fixed and which extends in the vehicle length direction and a leg **33** extending downward from both of the vehicle widthwise ends of the bottom wall **31**. A front end **27a** and a rear end **27b** of the lower rail **27** are fixed to parts of a top wall **13** of the connector bracket **11** (to be described later) near and above the front and rear cross-members **7** and **9** using fixing bolts **57**, respectively. At the fixing points **11a** and **11b**, downward convex portions **59a** and **59b** formed on a bottom face **31a** of the bottom wall **31** are in contact with the top face of the top wall **13** of the connector bracket **11**.

The connector bracket **11** extends in the vehicle length direction to connect the front and rear cross-members**7** and **9** and has a top wall **13**, a vertical wall **15** and an end wall **17**.

The top wall **13** is substantially in the shape of a rectangular plate. The top wall **13** is arranged substantially horizontally to be spaced upward from the top faces **7a** and **9a** of the front and rear cross-members **7** and **9**, while it is positioned adjacent to the bottom face **31a** of the bottom wall **31** of the lower rail **27**. The top wall **13** has a front end positioned in front of the front cross-member **7** in the vehicle length direction and a rear end positioned behind the rear cross-member **9** in the vehicle length direction. For higher rigidity, the top wall **13** is provided with a bulge **61** which bulges upward in a trapezoidal shape when viewed in section at the vehicle widthwise outer end thereof. An extension part **13a** extending outward in the vehicle width direction from a lower end of an inclined vehicle widthwise outer face of the bulge **61**, i.e., a vehicle widthwise outer end **13a** of the top wall **13**, is fixed to a top face **5a** of the side sill **5**.

The vertical wall **15** is substantially in the shape of a rectangular plate and extends downward from a vehicle widthwise inner end of the top wall **13** to reach the top face of the floor **3** by its lower end. The vertical wall **15** is provided with two rectangular cutaway portions **63** spaced from each other in the vehicle length direction. The cutaway portions **63** are shaped to fit with the front and rear cross-members **7** and **9**, respectively.

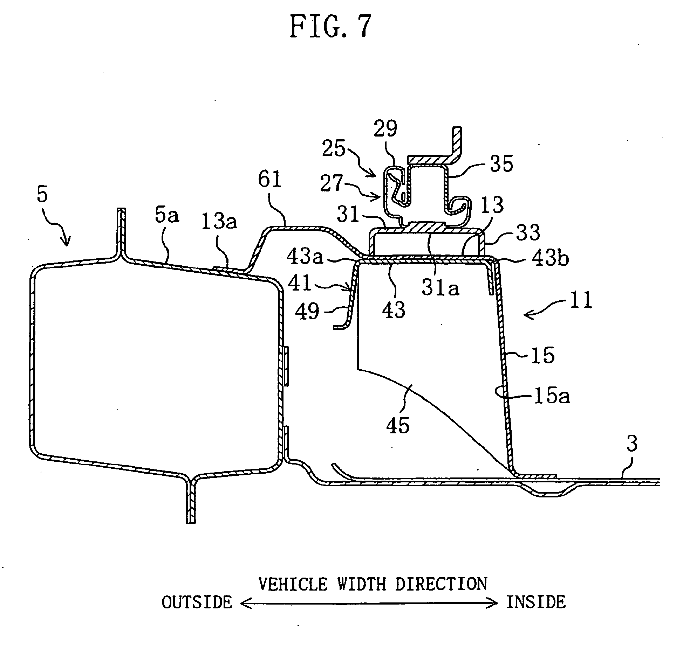

Between the front cross-member **7** and the rear cross-member **9**, the connector bracket **11** is configured as shown in FIG. **7**. More specifically, the vehicle widthwise outer end **13a** of the top wall **13** is fixed to the top face **5a** of the side sill **5** and the lower end of the vertical wall **15** is fixed to the top face of the floor **3**. When viewed from the front (when viewed from the front of the vehicle **37**), the connector bracket **11** forms a closed section together with the floor **3** and the side sill **5**.

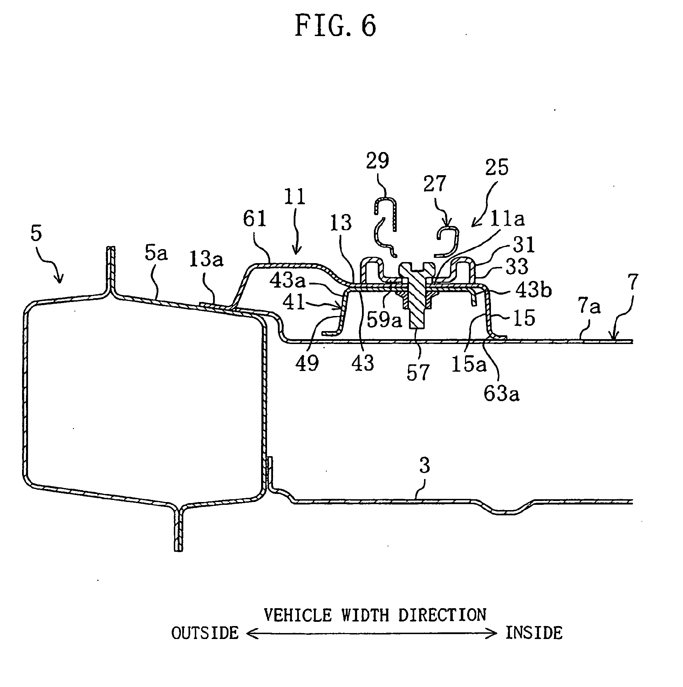

Between the front and rear ends of the front cross-member **7** and between the front and rear ends of the rear cross-member **9**, the connector bracket **11** is configured as shown in FIG. **6**. More specifically, the vehicle widthwise outer end **13a** of the top wall **13** is fixed to the top face **5a** of the side sill **5** and upper edges **63a** of the cutaway portions **63** of the vertical wall **15** are fixed to the top faces **7a** and **9a** of the cross-members **7** and **9**, respectively. Thus, when viewed from the front, the connector bracket **11** forms a closed section together with the cross-members **7** and **9** and the side sill **5**.

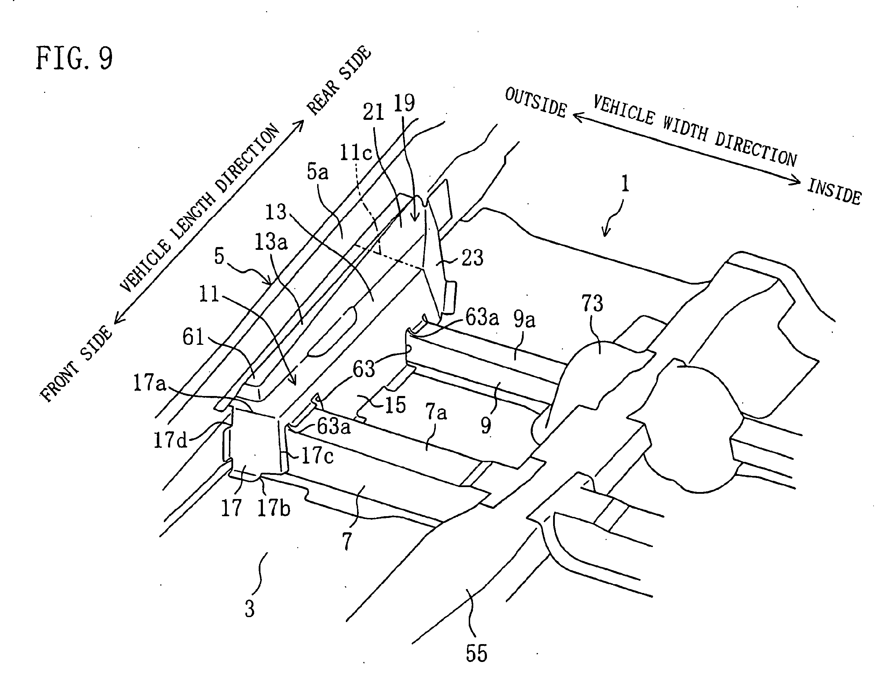

The end wall **17** is substantially in the shape of a rectangular plate. As shown in FIG. **9**, the end wall **17** is configured so that its upper end **17a** is continuous with to the top wall **13** and its lower end **17b** is fixed to the top face of the floor **3**. Further, its vehicle widthwise inner end **17c** is continuous with the vertical wall **15** and its vehicle widthwise outer end **17d** is fixed to the side sill **5**.

The connector bracket **11** further includes an integral extension part **19** extending rearward from its rear end **11c** in the vehicle length direction. A vertical wall (a vehicle widthwise inner face) **23** of the extension part **19** extends at an outward inclination from the front to the rear of the vehicle. A vehicle widthwise inner end of a top wall **21** of the extension part **19** integrated with the top wall **13** of the connector bracket 11 also extends at an outward inclination from the front to the rear of the vehicle along the vertical wall **23**. Thus, the connector bracket **11** is substantially trapezoidal when viewed in plan.

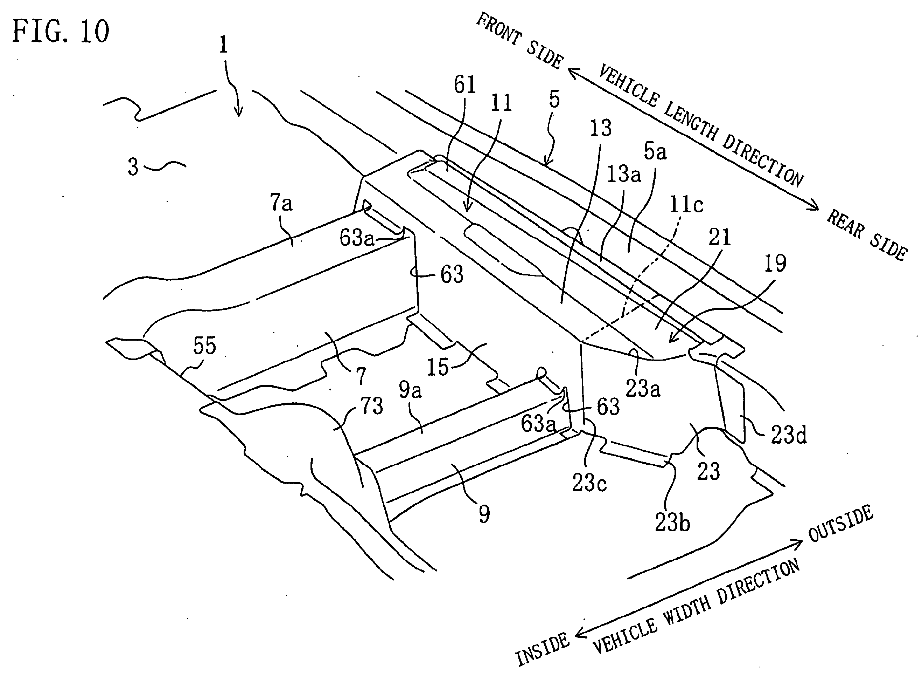

As shown in FIG. **10**, the vertical wall **23** of the extension part **19** is configured so that its upper end **23a** is continuous with the top wall **21** of the extension part **19** and its lower end **23b** is fixed to the top face of the floor **3**. Further, its front end **23c** is continuous with the vertical wall **15** of the connector bracket **11** and its rear end **23d** is fixed to the side sill 5.

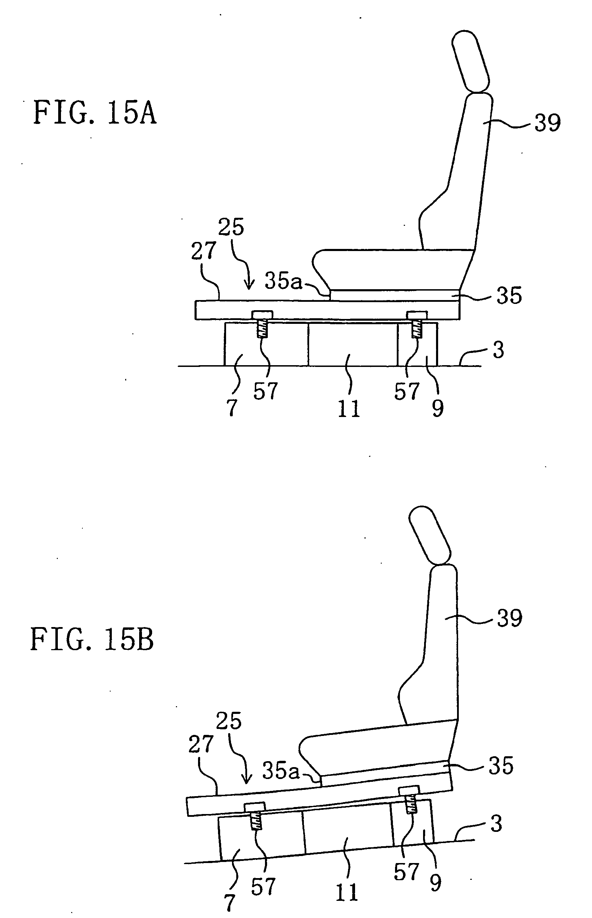

In other words, in the right portion of the vehicle bottom structure **1**, the connector bracket **11**, the floor **3** and the side sill **5** form a hollow box-shaped structure enclosing the vehicle widthwise outer ends of the front and rear cross-members **7** and **9**. Thus, as shown in FIG. **15A**, the lower rail **27** is supported on the box-shaped connector bracket **11**. Even when a large downward load is applied to the lower rail **27** from the front end **35a** of the upper rail **35**, the lower rail **27** is less likely to come off the rear cross-member **9**, though it may be deformed slightly as shown in FIG. **15B**.

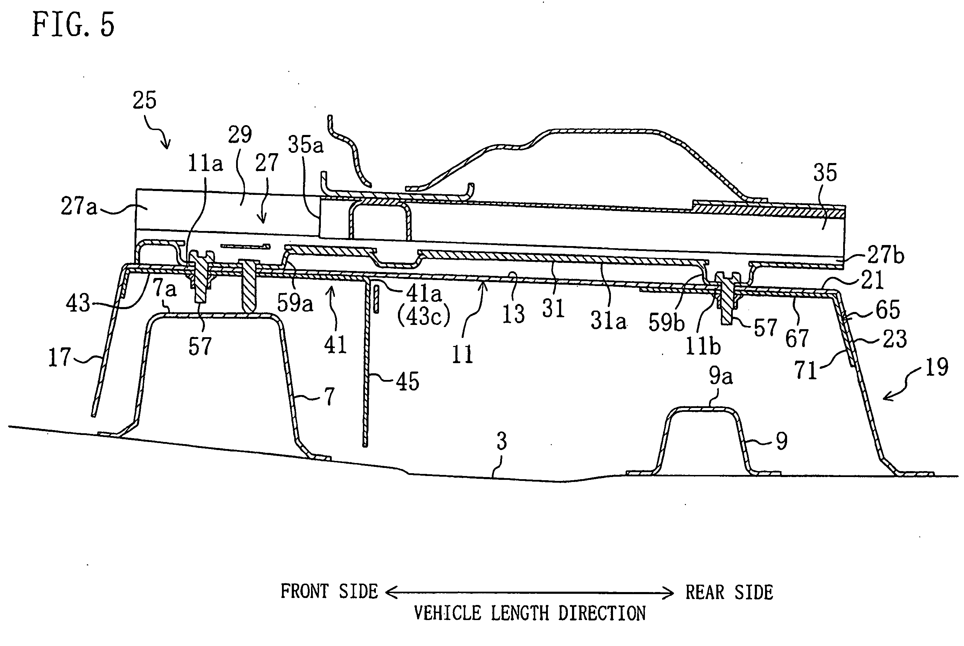

The first reinforcement member **41** reinforces the fixing point (the front fixing point) **11a** on the connector bracket **11** to which the front end **27a** of the lower rail **27** is fixed and its vicinity. As shown in FIGS. **5** to **7**, the first reinforcement member **41** is assembled to the inside of the connector bracket **11**.

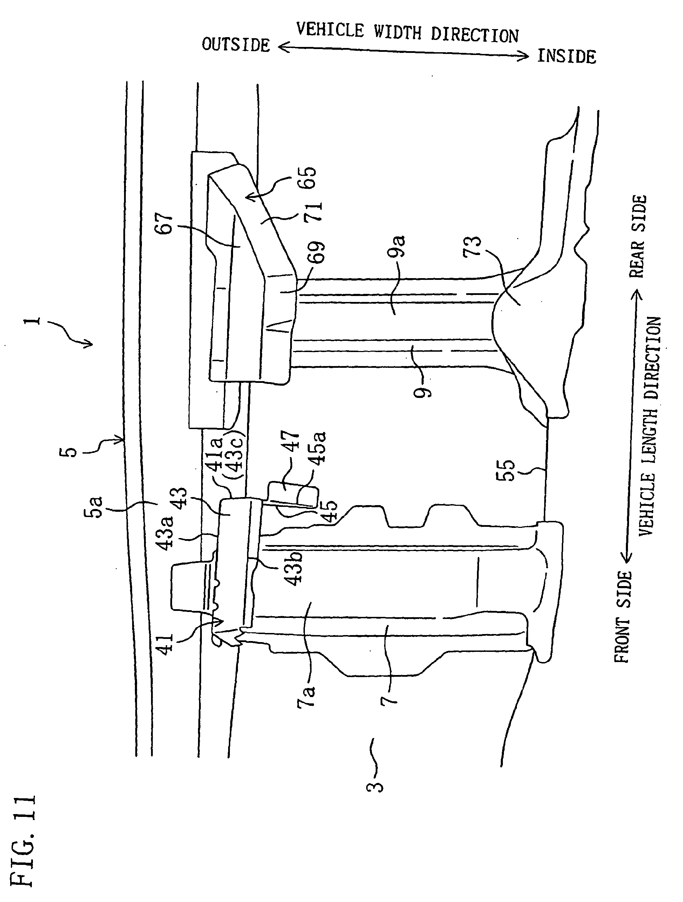

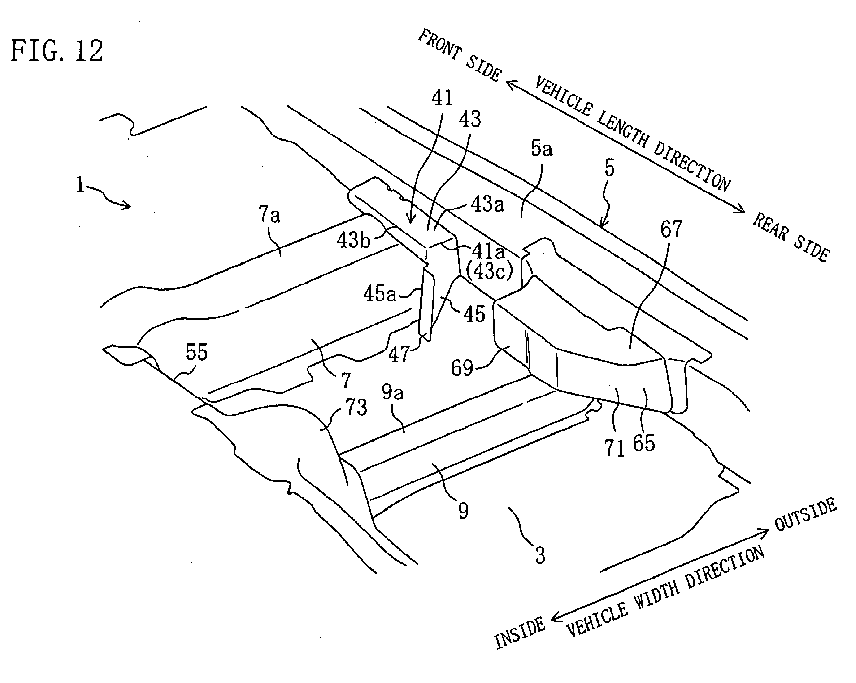

FIGS. **11** and **12** show the first and second reinforcement member **41** and **65** with the connector bracket **11** removed. The first reinforcement member **41** has a top wall **43**, a rear wall **45**, an inside wall **47** and an outside wall **49** (see FIG. 6).

FIG. **5** shows the state where the front seat **39** is in the rearmost position in the vehicle length direction. The top wall **43** of the first reinforcement member **41** extends rearward in the vehicle length direction from near the front end of the front cross-member **7** along the top wall **13** of the connector bracket **11** so that its rear end **43c** (a rear end **41a** of the first reinforcement member **41**) comes behind the front end **35a** of the upper rail **35** when the front seat **39** is in the rearmost position.

The rear wall **45** extends downward from the rear end **43c** of the top wall **43** of the first reinforcement member **41** and a lower end thereof extends at a downward inclination from the outside to the inside of the vehicle. The inside wall **47** extends rearward in the vehicle length direction from a vehicle widthwise inner end **45a** of the rear wall **45** and fixed to a vehicle widthwise outer face **15a** of the vertical wall **15** of the connector bracket **11**. The outside wall **49** extends downward from a vehicle widthwise outer end **43a** of the top wall **43** of the first reinforcement member **41** with its lower end adjacent to the top face **7a** of the front cross-member **7**.

The second reinforcement member **65** reinforces the fixing point (the rear fixing point) **11b** on the connector bracket **11** to which the rear end **27b** of the lower rail **27** is fixed and its vicinity. Just like the first reinforcement member **41**, the second reinforcement member **65** is assembled to the inside of the connector bracket **11**.

The second reinforcement member **65** has a substantially trapezoidal top wall **67** extending above the rear cross-member **9** in the vehicle length direction along the top wall **13** of the connector bracket **11**, a vertical wall **69** extending downward from a vehicle widthwise inner end of the top wall **67** and a rear wall **71** extending at an outward inclination from the front to the rear of the vehicle. The top wall **67**, the vertical wall **69** and the rear wall **71** of the second reinforcement member **65** are continuous with each other. The second reinforcement member **65** is assembled so that the top wall **67**, the vertical wall **69** and the rear wall **71** are opposed to the top wall **13** of the connector bracket **11**, the vertical wall **15** of the connector bracket **11** and the vertical wall **23** of the extension part **19**, respectively, thereby improving the rigidity of the rear fixing point **11b** on the connector bracket **11** and its vicinity.

### -Effect-

According to the present embodiment, the connector bracket **11** extends in the vehicle length direction to connect the front and rear cross-members **7** and **9** and forms a closed section between the front and rear cross-members **7** and **9** together with the floor **3** and the side sill **5**. Further, the connector bracket **11** has the top wall **13** adjacent to the bottom face **31a** of the bottom wall **31** of the lower rail **27**. Therefore, when a load caused by forward movement of a passenger upon a frontal collision is applied to the seat slide rail **25**, the connector bracket **11** supports the seat slide rail **25** so that the deformation of the seat slide rail **25** is less likely to occur. Further, the rigidity of the side sill **5** is improved. Accordingly, even if the vehicle **37** is free from the center pillar and provided with the seat slide rail **25** extending across the front and rear cross-members **7** and **9**, the possibilities of break of the seat slide rail **25** upon a frontal collision and inward fall of the side sill **5** upon a lateral collision are reduced.

Further, due to the presence of the reinforcement member **41**, the front fixing point **11a** on the connector bracket **11** to which the load is applied upon the frontal collision and its vicinity are reinforced.

Since the first reinforcement member **41** has the inside wall **47** to be fixed to the vehicle widthwise outer face **15a** of the vertical wall **15** of the connector bracket **11**, the vertical wall **15** of the connector bracket **11** is also reinforced in addition to the top wall **13**. As a result, the buckling strength of the vertical wall **15** against a downward load is improved.

As the first reinforcement member **41** has the outside wall **49**, the vertical rigidity of the vehicle widthwise outer part of the front fixing point **11a** is improved.

The first reinforcement member **41** extends in the vehicle length direction above the front cross-member **7** so that the rear end **41a** comes behind the front end **35a** of the upper rail **35** when the seat **39** is in the rearmost position in the vehicle length direction. Therefore, part of the connector bracket **11** corresponding to the front end **35a** of the upper rail **35**, which is a point of application of a load upon a frontal collision, is reinforced irrespective of the position of the upper rail **35**.

Further, since a plurality of closed sections are formed near the front fixing point 11a, support rigidity of the connector bracket **11** is improved.

The vehicle widthwise outer end **13a** of the top wall **13** of the connector bracket **11** is fixed to the top face **5a** of the side sill **5**. Therefore, the closed section formed by the connector bracket **11** is enlarged. This improves the rigidity of the side sill **5** and therefore the possibility of the inward fall of the side sill **5** upon a lateral collision is reduced with reliability.

The vertical wall **23** of the extension part **19** of the connector bracket **11** extends at an outward inclination from the front to the rear of the vehicle. Therefore, the rear fixing point **11b** is improved in rigidity, while keeping space below the rear seat.

### (Embodiment 2)

The present embodiment is different from Embodiment 1 in the structure of connector bracket and the reinforcement member. Hereinafter, a right portion of the vehicle bottom structure **1** is explained. A left portion thereof is configured almost in the same manner as the right portion.

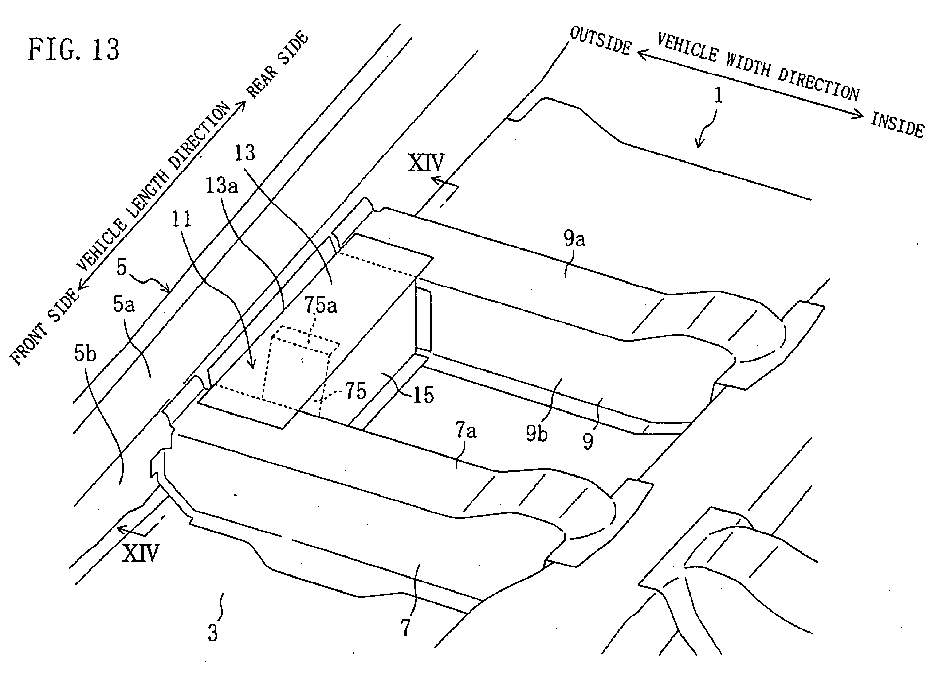

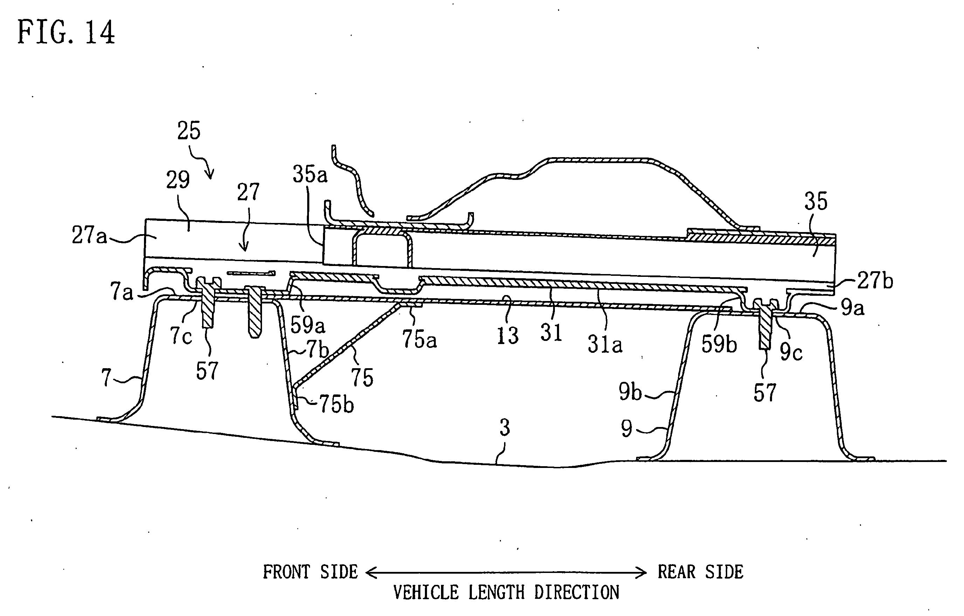

FIGS. **13** and **14** schematically show the vehicle bottom structure **1** according to the present embodiment. The right portion of the vehicle bottom structure **1** includes a floor **3**, a side sill **5**, front and rear cross-members **7** and **9**, seat slide rails **25**, a connector bracket **11** and a third reinforcement member **75** for reinforcing the connector bracket **11**.

The front and rear cross-members **7** and **9** are substantially rectangular when viewed in section and have substantially the same sectional dimension. A front end **27a** and a rear end **27b** of a lower rail **27** are fixed to top faces **7a** and **9a** of the front and rear cross-members **7** and **9** using fixing bolts **57**, respectively. At the fixing points **7c** and **9c**, downward convex portions **59a** and **59b** formed on a bottom wall **31** of the lower rail **27** are in contact with the top faces **7a** and **9a** of the front and rear cross-members **7** and **9**, respectively.

The connector bracket **11** extends in the vehicle length direction to connect a rear face **7b** (a rear end) of the front cross-member **7** and a front face **9b** (a front end) of the rear cross-member **9** and has a top wall **13** and a vertical wall **15**.

The top wall **13** is substantially in the shape of a rectangular plate. The top wall **13** is arranged substantially horizontally to be flush with the top faces **7a** and **9a** of the front and rear cross-members **7** and **9**, while it is positioned adjacent to a bottom face **31a** of the bottom wall **31** of the lower rail **27**. The top wall **13** has a front end positioned substantially at the vehicle lengthwise center of the front cross-member **7** and a rear end positioned substantially in the vehicle lengthwise center of the rear cross-member **9**. A vehicle widthwise outer end **13a** of the top wall **13** is fixed to a side face **5b** of the side sill **5**.

The vertical wall **15** is substantially in the shape of a rectangular plate and extends downward from a vehicle widthwise inner end of the top wall **13** to reach the top face of the floor **3** by its lower end. A front end and a rear end of the vertical wall **15** are fixed to a rear face **7b** of the front cross-member **7** and a front face **9b** of the rear cross-member **9**, respectively.

As the vehicle widthwise outer end **13a** of the top wall **13** is fixed to the side face **5b** of the side sill **5** and the lower end of the vertical wall **15** is fixed to the top face of the floor **3** in this way, the connector bracket **11** forms a closed section together with the floor **3** and the side sill **5** when viewed from the front.

In other words, in the right portion of the vehicle bottom structure **1**, the connector bracket **11**, the rear face **7b** of the front cross-member **7**, the front face **9b** of the rear cross-member **9**, the floor **3** and the side sill **5** form a hollow box-shaped structure at the vehicle widthwise outer end of the front and rear cross-members **7** and **9**. Therefore, as shown in FIG. **15A**, the lower rail **27** is supported on the box-shaped connector bracket **11**. Even when a large downward load is applied to the lower rail **27** from a front end **35a** of the upper rail **35**, the lower rail **27** is less likely to come off the rear cross-member **9**, though it may be deformed slightly as shown in FIG. **15B**.

The third reinforcement member **75** is assembled to the inside of the connector bracket 11 to reinforce part of the connector bracket **11** corresponding to the front end **35a** of the upper rail **35** when the front seat **39** is in the rearmost position (see FIG. **14**), i.e., a part to which a load is applied upon a frontal collision, and its vicinity.

The third reinforcement member **75** is substantially in the shape of a rectangular plate and extends at a downward inclination from the rear to the front of the vehicle. An upper end **75a** of the third reinforcement member **75** is fixed to part of the bottom face of the top wall **13** of the connector bracket **11** to which a load is applied upon a frontal collision and its vicinity and an lower end **75b** thereof is fixed to the rear end face **7b** of the front cross-member **7**. As the third reinforcement member **75** is so arranged, it functions as an angle brace, thereby increasing the vertical rigidity of the connector bracket **11**.

### -Effect-

According to the present embodiment, the connector bracket **11** extends to connect the rear face **7b** of the front cross-member **7** and the front face **9b** of the rear cross-member **9**. Therefore, the deformation of the seat slide rail **25** is reduced by such a simple structure including the substantially rectangular plate-shaped top wall **13** and the substantially rectangular plate-shaped vertical wall **15**. Further, the connector bracket **11** is reduced in size, as well as in weight.

Since the third reinforcement member **75** reinforces part of the connector bracket **11** corresponding to the front end **35a** of the upper rail **35** when the front seat **39** is in the rearmost position in the vehicle length direction and its vicinity, part of the connector bracket **11** to which a load is applied upon a frontal collision and its vicinity are reinforced.

Further, as the third reinforcement member **75** functions as an angle brace, the vertical rigidity of the connector bracket **11** is improved. Thus, the part of the connector bracket **11** to which a load is applied upon a frontal collision and its vicinity are reinforced with reliability.

### -Other Embodiments-

According to the above-described embodiments, the top wall **13** of the connector bracket **11** is adjacent to the bottom face **31a** of the bottom wall **31** of the lower rail **27**. However, the top wall **13** of the connector bracket **11** may be in contact with the bottom face **31a** of the bottom wall **31** of the lower rail **27**. In this case, the deformation of the seat slide rail **25** is reduced with more reliability.

According to Embodiment 1, the rear end **41a** of the first reinforcement member **41** comes behind the front end **35a** of the upper rail **35** when the front seat **39** is in the rearmost position in the vehicle length direction. However, since the rigidity of the connector bracket **11** is enhanced as long as the first reinforcement member **41** is provided, it is not always necessary that the rear end **41a** of the first reinforcement member **41** comes behind the front end **35a** of the upper rail **35** in the vehicle length direction.

According to Embodiment 1, the first and second reinforcement member **41** and **65** are provided to reinforce the front fixing point **11a** and the rear fixing point **11b**, respectively. However, since a large load is applied to the lower rail **27** from the upper rail **35** in the vicinity of the front fixing point **11a** upon a frontal collision, it may be possible to provide only the first reinforcement member **41** for reinforcing the front fixing point **11a**.

The above embodiments shall be interpreted as illustrative and not in a limiting sense. Further, it is also to be understood that all the changes and modifications made within the scope of the claims fall within the scope of the present invention.

As described above, the present invention is useful for a vehicle bottom structure provided with seat slide rails extending across front and rear cross members.

## Claims

1. A vehicle bottom structure comprising:
a floor (3);
a side sill (5) extending in the vehicle length direction at a vehicle widthwise end of the floor (3);
front and rear cross-members (7, 9) extending in the vehicle width direction on the floor (3) to be spaced from each other in the vehicle length direction with their vehicle widthwise ends being connected to the side sill (5);
a seat slide rail (25) extending in the vehicle length direction across the front and rear cross-members (7, 9) to allow a seat (39) to move back and forth in the vehicle length direction; and
a connector bracket (11) extending in the vehicle length direction to connect the front and rear cross-members (7, 9) and forming a closed section between the front and rear cross-members (7, 9) together with the floor (3) and the side sill (5), wherein
the seat slide rail (25) has a lower rail (27) having a bottom wall (31) and an upper rail (35) bearing the seat (39) and being slidable on the lower rail (27) and
the connector bracket (11) has a top wall (13) in contact with or adjacent to a bottom face (31 a) of the bottom wall (31) of the lower rail (27) and a vertical wall (15) extending downward from the top wall (13) and
front and rear ends (27a, 27b) of the lower rail (27) are fixed to parts of the top wall (13) of the connector bracket (11) near and above the front and rear cross-members (7, 9), respectively; **characterized in that**
the vehicle bottom structure further comprises a reinforcement member (41) for reinforcing a fixing point (11 a) on the connector bracket (11) to which the front end (27a) of the lower rail (27) is fixed and its vicinity.

2. The vehicle bottom structure of Claim 1, wherein
the reinforcement member (41) is provided inside the connector bracket (11) and has a top wall (43) extending above the front cross-member (7) in the vehicle length direction along the top wall (13) of the connector bracket (11), a rear wall (45) extending downward from a rear end (43c) of the top wall (43) of the reinforcement member (41) and an inside wall (47) extending rearward in the vehicle length direction from a vehicle widthwise inner end (45a) of the rear wall (45) and fixed to a vehicle widthwise outer face of the vertical wall (15) of the connector bracket (11).

3. The vehicle bottom structure of Claim 2, wherein
the reinforcement member (41) further includes an outside wall (49) extending downward from a vehicle widthwise outer end (43a) of the top wall (43) in addition to the top wall (43), the rear wall (45) and the inside wall (47) and
a lower end of the outside wall (49) is in contact with or adjacent to a top face (7a) of the front cross-member (7).

4. The vehicle bottom structure of any one of Claims 1 to 3, wherein
the reinforcement member (41) extends rearward in the vehicle length direction above the front cross-member (7) so that its rear end (41 a) comes behind a front end (35a) of the upper rail (35) when the seat (39) is in the rearmost position in the vehicle length direction.

5. The vehicle bottom structure of any one of Claims 1 to 4, wherein
the top wall (13) of the connector bracket (11) is spaced upward from the top faces (7a, 9a) of the front and rear cross-members (7, 9) so that the connector bracket (11) forms a closed section together with the front and rear cross-members (7, 9) and the side sill (5).

6. The vehicle bottom structure of any one of claims 1 to 5, wherein
a vehicle widthwise outer end (13a) of the top wall (13) of the connector bracket (11) is fixed to a top face of the side sill (5).

7. The vehicle bottom structure of any one of Claims 1 to 6, wherein
the connector bracket (11) has an extension part (19) extending rearward in the vehicle length direction from its rear end and
the extension part (19) has a vertical wall (23) extending at an outward inclination from the front to the rear of the vehicle.

## Patentansprüche

1. Untere Struktur eines Fahrzeuges, umfassend:
einen Boden (3);
ein Seitenbord (5), das sich in der Fahrzeuglängenrichtung an einem bezüglich der Fahrzeugbreite gegebenen Ende des Bodens (3) erstreckt;
vordere und hintere Querglieder (7, 9), die sich in der Fahrzeugbreitenrichtung an dem Boden (3) mit einer Beabstandung voneinander in der Fahrzeuglängenrichtung erstrecken, wobei deren bezüglich der Fahrzeugbreite gegebene Enden mit dem Seitenbord (5) verbunden sind;
eine Sitzgleitverschiebungsschiene (25), die sich in der Fahrzeuglängenrichtung über die vorderen und hinteren Querglieder (7, 9) erstreckt, um einem Sitz (39) eine Rückwärtsund Vorwärtsbewegung in der Fahrzeuglängenrichtung zu ermöglichen; und
einen Verbinderbügel (11), der sich in der Fahrzeuglängenrichtung zur Verbindung der vorderen und hinteren Querglieder (7, 9) erstreckt und einen geschlossenen Abschnitt zwischen den vorderen und hinteren Quergliedern (7, 9) zusammen mit dem Boden (3) und dem Seitenbord (5) bildet, wobei
die Sitzgleitverschiebungsschiene (25) eine unterseitige Schiene (27) mit einer unteren Wand (31) und eine oberseitige Schiene (35) zum Tragen des Sitzes (39) und mit Gleitverschieblichkeit an der unterseitigen Schiene (27) aufweist,
der Verbinderbügel (11) eine obere Wand (13) in Kontakt mit oder benachbart zu einer unteren Fläche (31a) der unteren Wand (31) der unterseitigen Schiene (27) und eine vertikale Wand (15) mit einer Erstreckung von der oberen Wand (13) aus nach unten aufweist; und
vordere und hintere Enden (27a, 47b) der unterseitigen Schiene (27) an Teilen der oberen Wand (13) des Verbinderbügels (11) nahe an und über den vorderen beziehungsweise hinteren Quergliedern (7, 9) fixiert sind;
**dadurch gekennzeichnet, dass**
die untere Struktur des Fahrzeuges des Weiteren ein Verstärkungsglied (41) zum Verstärken eines Fixierpunktes (11a) an dem Verbinderbügel (11), an dem das vordere Ende (27a) der unterseitigen Schiene (27) fixiert ist, und der Umgebung hiervon umfasst.

2. Untere Struktur eines Fahrzeuges nach Anspruch 1, wobei:
das Verstärkungsglied (41) innerhalb des Verbinderbügels (11) vorgesehen ist und eine obere Wand (43), die sich über dem vorderen Querglied (7) in der Fahrzeuglängenrichtung entlang der oberen Wand (13) des Verbinderbügels (11) erstreckt, eine hintere Wand (45), die sich von einem hinteren Ende (43c) der oberen Wand (43) des Verstärkungsgliedes (41) aus nach unten erstreckt, und eine innenseitige Wand (47), die sich in der Fahrzeuglängenrichtung von einem bezüglich der Fahrzeugbreite gegebenen inneren Ende (45a) der hinteren Wand (45) aus nach hinten erstreckt und an einer bezüglich der Fahrzeugbreite gegebenen äußeren Fläche der vertikalen Wand (15) des Verbinderbügels (11) fixiert ist.

3. Untere Struktur eines Fahrzeuges nach Anspruch 2, wobei:
das Verstärkungsglied (41) des Weiteren eine außenseitige Wand (49) mit einer Erstreckung von einem bezüglich der Fahrzeugbreite gegebenen äußeren Ende (43a) der oberen Wand (43) aus zusätzlich zu der oberen Wand (43), der hinteren Wand (45) und der innenseitigen Wand (47) beinhaltet und
ein unterseitiges Ende der außenseitigen Wand (49) in Kontakt mit oder benachbart zu einer oberen Fläche (7a) des vorderen Quergliedes (7) ist.

4. Untere Struktur eines Fahrzeuges nach einem der Ansprüche 1 bis 3, wobei:
das Verstärkungsglied (41) sich in der Fahrzeuglängenrichtung über dem vorderen Querglied (7) derart nach hinten erstreckt, dass das hintere Ende (41 a) hiervon hinter ein vorderes Ende (35a) der oberen Schiene (35) gelangt, wenn der Sitz (39) in der am weitesten hinten befindlichen Position in der Fahrzeuglängenrichtung ist.

5. Untere Struktur eines Fahrzeuges nach einem der Ansprüche 1 bis 4, wobei:
die obere Wand (13) des Verbinderbügels (11) nach oben hin von den oberen Flächen (7a, 9a) der vorderen und hinteren Querglieder (7, 9) beabstandet ist, sodass der Verbinderbügel (11) einen geschlossenen Abschnitt zusammen mit den vorderen und hinteren Quergliedern (7, 9) und dem zweiten Bord (5) bildet.

6. Untere Struktur eines Fahrzeuges nach einem der Ansprüche 1 bis 5, wobei:
ein bezüglich der Fahrzeugbreite gegebenes äußeres Ende (13a) der oberen Wand (13) des Verbinderbügels (11) an einer oberen Fläche des Seitenbordes (5) fixiert ist.

7. Untere Struktur eines Fahrzeuges nach einem der Ansprüche 1 bis 6,
wobei der Verbinderbügel (11) einen Erweiterungsteil (19) aufweist, der sich in der Fahrzeuglängenrichtung von dessen hinterem Ende aus nach hinten erstreckt, und
der Erweiterungsteil (19) eine vertikale Wand (23) mit einer Erstreckung bei einer nach außen gegebenen Neigung von vorne nach hinten in dem Fahrzeug aufweist.

## Revendications

1. Structure inférieure de véhicule comprenant :
un sol (3) ;
un longeron latéral (5) s'étendant dans la direction longitudinale du véhicule à une extrémité du sol (3) dans le sens de la largeur du véhicule ;
des traverses avant et arrière (7, 9) s'étendant dans le sens de la largeur du véhicule sur le sol (3) devant être espacées l'une de l'autre dans la direction longitudinale du véhicule avec leurs extrémités dans le sens de la largeur du véhicule qui sont connectées au longeron latéral (5) ;
un rail coulissant de siège (25) s'étendant dans la direction longitudinale du véhicule en travers des traverses avant et arrière (7, 9) pour permettre au siège (39) de reculer et d'avancer dans la direction longitudinale du véhicule ; et
un support de connexion (11) s'étendant dans la direction longitudinale du véhicule pour connecter les traverses avant et arrière (7, 9) et formant une section fermée entre les traverses avant et arrière (7, 9) avec le sol (3) et le longeron latéral (5), dans laquelle
le rail coulissant de siège (25) possède un rail inférieur (27) ayant une paroi inférieure (31) et un rail supérieur (35) portant le siège (39) et pouvant coulisser sur le rail inférieur (27) et
le support de connexion (11) possède une paroi supérieure (13) en contact avec ou adjacente à une face inférieure (31a) de la paroi inférieure (31) du rail inférieur (27) et une paroi verticale (15) s'étendant vers le bas depuis la paroi supérieure (13) ; et
les extrémités avant et arrière (27a, 27b) du rail inférieur (27) sont fixées à des parties de la paroi supérieure (13) du support de connexion (11) près de et au-dessus des traverses avant et arrière (7, 9), respectivement, **caractérisée en ce que**
la structure inférieure de véhicule comprend en outre un élément de renforcement (41) pour renforcer un point de fixation (11a) sur le support de connexion (11) auquel l'extrémité avant (27a) du rail inférieur (27) est fixée et sa proximité.

2. Structure inférieure de véhicule selon la revendication 1, dans laquelle l'élément de renforcement (41) est prévu à l'intérieur du support de connexion (11) et possède une paroi supérieure (43) s'étendant au-dessus de la traverse avant (7) dans la direction longitudinale du véhicule le long de la paroi supérieure (13) du support de connexion (11), une paroi arrière (45) s'étendant vers le bas depuis une extrémité arrière (43c) de la paroi supérieure (43) de l'élément de renforcement (41) et une paroi intérieure (47) s'étendant vers l'arrière dans la direction longitudinale du véhicule depuis une extrémité interne dans le sens de la largeur du véhicule (45a) de la paroi arrière (45) et fixée à une face externe dans le sens de la largeur du véhicule de la paroi verticale (15) du support de connexion (11).

3. Structure inférieure de véhicule selon la revendication 2, dans laquelle l'élément de renforcement (41) inclut en outre une paroi extérieure (49) s'étendant vers le bas depuis une extrémité externe dans le sens de la largeur du véhicule (43a) de la paroi supérieure (43) outre la paroi supérieure (43), la paroi arrière (45) et la paroi intérieure (47), et
une extrémité inférieure de la paroi extérieure (49) est en contact avec ou adjacente à une face supérieure (7a) de la traverse avant (7).

4. Structure inférieure de véhicule selon l'une quelconque des revendications 1 à 3, dans laquelle
l'élément de renforcement (41) s'étend vers l'arrière dans la direction longitudinale du véhicule au-dessus de la traverse avant (7) de sorte que son extrémité arrière (41a) vient derrière une extrémité avant (35a) du rail supérieur (35) lorsque le siège (39) est dans la position la plus reculée dans la direction longitudinale du véhicule.

5. Structure inférieure de véhicule selon l'une quelconque des revendications 1 à 4, dans laquelle
la paroi supérieure (13) du support de connexion (11) est espacée vers le haut depuis les faces supérieures (7a, 9a) des traverses avant et arrière (7, 9) de sorte que le support de connexion (11) forme une section fermée avec les traverses avant et arrière (7, 9) et le longeron latéral (5).

6. Structure inférieure de véhicule selon l'une quelconque des revendications 1 à 5, dans laquelle
une extrémité externe dans le sens de la largeur du véhicule (13a) de la paroi supérieure (13) du support de connexion (11) est fixée à une face supérieure du longeron latéral (5).

7. Structure inférieure de véhicule selon l'une quelconque des revendications 1 à 6, dans laquelle
le support de connexion (11) possède une partie de prolongement (19) s'étendant vers l'arrière dans la direction longitudinale du véhicule depuis son extrémité arrière et
la partie de prolongement (19) possède une paroi verticale (23) s'étendant à une inclinaison vers l'extérieur de l'avant vers l'arrière du véhicule.
